Europäisches Patentamt

European Patent Office

Office européen des brevets

(11) Publication number: **0 101 161**
**B1**

# EUROPEAN PATENT SPECIFICATION

(45) Date of publication of patent specification: **11.03.87**

(21) Application number: **83303532.2**

(22) Date of filing: **20.06.83**

(51) Int. Cl.⁴: **G 01 N 1/00, G 01 N 1/14, G 01 N 33/48, F 04 B 5/00**

(54) Apparatus and method for passing two fluids simultaneously through an analytical flow cell.

(30) Priority: **16.08.82 US 408390**

(43) Date of publication of application:
**22.02.84 Bulletin 84/08**

(45) Publication of the grant of the patent:
**11.03.87 Bulletin 87/11**

(84) Designated Contracting States:
**DE FR GB IT**

(56) References cited:
**EP-A-0 039 146**
**EP-A-0 046 345**
**DE-A-1 498 960**
**US-A-3 525 592**
**US-A-3 661 460**
**US-A-3 740 143**

(73) Proprietor: **TECHNICON INSTRUMENTS CORPORATION**
**511 Benedict Avenue**
**Tarrytown, New York 10591 (US)**

(72) Inventor: **Farrell, Gregory A.**
**1080 Belle Avenue**
**Teaneck New Jersey 07666 (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

This invention relates to a method and apparatus for passing two fluids simultaneously through an analytical flow cell. More particularly, the invention relates to a volumetric pumping apparatus and method for the precisely controlled and coordinated supply of sheath stream and sample fluids to a sheath stream flow cell for sample analyses, which are especially useful for high-speed automated biomedical analytical systems.

Although prior art apparatus and methods are known for the supply of sheath stream and sample fluids to sheath stream flow cells, none of these accomplishes these functions in a precisely controlled and coordinated manner. In many instances, these prior art apparatus and methods utilize peristaltic pumping to supply the sample fluid stream to the flow cell. This is disclosed, for example, in United States Patent 3,740,143, wherein peristaltic pumping is used to supply a series of diluted blood samples to a sheath stream flow cell for white blood cell differentiation and counting. We have found that this arrangement leads to less than optimal accuracy in cell differentiating and counting due to marginal variations in the peristaltic pump roller and pump tube dimensions, which cause variations in the diameter, velocity and/or volume of the sample fluid stream through the flow cell. Since separate pumping systems are used (the sheath stream fluid is pressure pumped from a constantly pressurized source in U.S. 3,740,413), variations in the essential sheath-sample fluid streams flow and volume ratios can also occur, to further reduce sample analysis accuracy. In addition, peristaltic pumping requires frequent and precise calibration, and the relatively long lengths of peristaltic pump and supply tubing markedly increase the potential for sample carryover. Carryover is defined as the contamination of a succeeding sample by the residue of a preceding sample resulting in loss of accuracy. Further, peristaltic pumping, which operates by the occlusion or squeezing of the pump tubes by the pump rollers, can and does result in damage to the integrity of cells or like sample fluid particles to further reduce accuracy.

Although more current efforts have been made to remedy some of the above-described problems through utilization of separate, finely calibrated peristaltic pumps for each of the sheath stream and sample fluids as described, for example, in the paper *Hydrodynamics of Concentric Peristaltic Laminar Flow of Two Different Fluids* G. A. Farrel and I. Beretsky, M.D., presented at the March 23, 1973 meeting of the American Association for Medical Instrumentation at Chicago, Illinois, these efforts have not proved fully satisfactory, especially in increasingly sophisticated automated biomedical analytical systems.

Other apparatus and methods are known for the supply of sheath stream and sample fluids to a sheath stream flow cell. For example, those disclosed in United States Patent 3,661,460 use a combination of gravity feed, peristaltic pumping and vacuum pumping, requiring liquid trap, pressure regulation, pressure gauge, and needle valve or other flow restrictor means, to those ends. These apparatus and methods can be difficult to calibrate and tend not to remain calibrated. European specification EP—A—46345 describes the use of one, or two, screw and syringe system positive displacement pumps for positively pumping sample and sheath fluids to a flow cell.

In unrelated fields of endeavour, double-acting reciprocating pumps having different effective pumping capacities are exemplified by United States Patents 2,025,142, 2,613,607, 3,205,825 and 3,713,755 wherein such pumps are disclosed in conjunction with the cooling of gas compressors, the bellow pump-proportioning of high-pressure fluids, the proportioning of fluids for beverage dispensing, and the thrust piston motor means-driven conveyance of fluids, respectively.

European specification EP—A—39146 describes a multiple chamber pump for use in measuring and testing instruments, e.g. in biological analyzers the pump having a single piston with a portion in each chamber to pump liquids in fixed ratios. It is said that the piston portions can be varied in size to have one chamber pumping whilst the other is aspirating, so as to allow continuous pumping.

We have now devised an apparatus and method for the precisely controlled and coordinated supply of sheath stream and sample fluids to a sheath stream flow cell for sample fluid analyses, with a view to maximizing the accuracy of those analyses.

According to the present invention, there is provided apparatus for the positively controlled and coordinated supply of first and second fluids from respective sources thereof to sheath stream flow cell analysis means which include a sheath stream flow cell having inlet means and outlet means, which apparatus includes pump means operatively associated with said sheath stream flow cell inlet means and with the respective sources of said first and second fluids, said pump means being operable to pump at a first flow rate the first of said fluids from its source to said sheath stream flow cell inlet means for flow through said sheath stream flow cell, characterised in that the pump means is a differential pump means and is operatively associated also with said flow cell outlet means and is operable, whilst pumping the first of said fluids to said sheath stream flow cell inlet means at said first flow rate, concomitantly to aspirate said second fluid from its source and said first and second fluids through said sheath stream flow cell outlet means at a second flow rate greater than said first flow rate whereby the flow rate of the second of said fluids through said sheath stream flow cell will be equal to the difference between said second and first flow rates, respectively.

The invention also provides a method for the positively controlled and coordinate supply of first and secnd fluids from respective sources thereof to sheath stream flow cell analysis means which include a sheath stream flow cell having inlet and outlet means, said method comprising the step of pumping the first said fluid at a first flow rate from its source to said sheath stream flow cell inlet means for flow through said sheath stream flow cell, characterized in that concomitantly with said pumping of said first fluid, the second of said fluids is aspirated from its source and the first and second of said fluids are aspirated from said sheath stream flow cell outlet means, at a second flow rate, greater than said first flow rate, whereby the flow rate of the second of said fluids through said sheath stream flow cell is equal to the difference between said second and first flow rates, respectively.

In one preferred embodiment of the invention, a double acting piston pump means is used, having pumping chambers of different capacities to differentially pump the sheath stream fluid to the flow cell inlet at a first flow rate, and concomitantly aspirate the sheath stream and sample fluids from the flow cell outlet at a second flow rate, thereby establishing the flow rate of the sample fluid through the sheath stream flow cell as the difference between the second flow rate and the first flow rate. The pump piston is preferably driven at constant linear velocity by connected linear actuator drive means to provide for the constancy of all individual fluid flow rates through the flow cell. Detecting means, for detecting a predetermined characteristic of the sample fluid, as the same is flowed through the flow cell, are preferably controlled in phase with the position of the pump piston in the pump cylinder.

The apparatus and method of the invention are particularly useful for supplying, in turn, reproducible volumes of each of a series of liquid samples, along with a precisely coordinated volume of a sheath stream liquid to the flow cell with minimal sample carryover, and find application in high-speed, automated biomedical .analytical systems.

In order that the invention may be more fully understood, one embodiment thereof will now be described, by way of example only, with reference to the accompanying drawings which is a generally schematic diagram of a volumetric pumping apparatus in accordance with the invention depicted in operating relationship with a sheath stream flow cell.

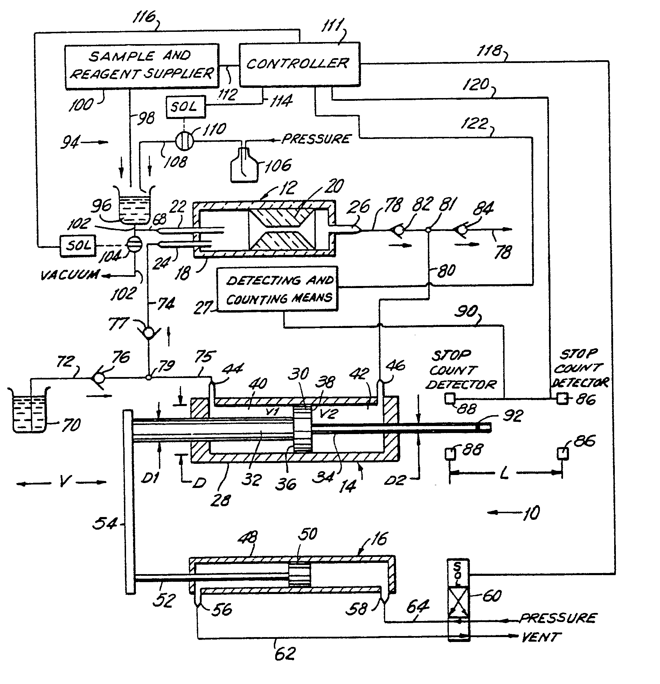

Referring now to the drawing, volumetric pumping apparatus constructed and operable in accordance with the teachings of this invention is indicated generally at 10, and is depicted in operative relationship with sheath stream flow cell as indicated generally at 12. Apparatus 10 comprises pump means, indicated generally at 14, which operates to supply the sheath and sample fluid streams to the flow cell 12. Pump drive means are indicated generally at 16.

The sheath stream flow cell 12 may, for example, generally take the form of that disclosed in United States Patent 3,661,460, cited above, to which reference should be made for further details. Flow cell 12 comprises a housing 18 and flow chamber 20, with the former including a sample stream inlet 22, sheath stream inlet 24, and a mixed stream outlet 26. Although not, *per se*, forming part of this invention, it may be understood that the sheath stream flow cell 12 brings the sample and sheath streams introduced at inlets 22 and 24, respectively, together to form a pair of concentric, substantially unmixed streams, with the sample stream at the center. Detecting and counting means 27 is operative to count the size particles per unit volume of the sample stream as the ensheathed stream flows through flow chamber 20. Precise control of the velocity, stability and diameter of the sample stream provides for a precise counting and sizing process.

Pump means 14 comprises a double acting, differential piston pump which includes a pump cylinder 28 having closed ends, and a double acting piston 30 of diameter D reciprocatable therein. Piston rods 32 and 34, of different respective diameters D1 and D2, with D1 being greater than D2, extend from opposed piston faces 36 and 38 through the opposite ends of pump cylinder 28. With piston 30 centrally positioned in pump cylinder 28, pump chambers 40 and 42 have different volumes V1 and V2, respectively, with V1 being smaller than V2. Different pumping capacities are thus avoided to opposite sides of piston 30. Such different pumping capacities result from the difference in the effective volumes of chambers 40 and 42 due to the difference in size (volume) of the connecting rods 32 and 34, respectively disposed therein. Equivalent modes of creating this difference in volume are possible.

Sheath fluid inlet/outlet 44 communicates with pump chamber 40, and inlet/outlet 46 communicates with pump chamber 42. Accordingly, first and second, volumetrically different albeit precisely coordinated pumping sections are provided within pump means 14.

As depicted in the drawing, the pump drive means 16 comprises a double acting fluid driven linear actuator which includes a drive cylinder 48 having closed ends, and a drive piston 50 reciprocatable therein. A piston rod 52 extends from piston 50 through an end of cylinder 48. A link 54 connects the respective ends of actuator piston rod 52 and pump piston rod 32. Inlet/outlets 56 and 58 are provided at opposite ends of drive cylinder 48. A solenoid operated control valve 60 is operative through conduits 62 and 64, and drive cylinder inlet/outlets 56 and 58, to control the supply of pressurized drive fluid from a non-illustrated source along conduits 62 and 64 alternatively to inlet-outlets 56 and 58 as shown, and simultaneously to alternatively vent such fluid along these conduits from those inlet/outlets, respectively. Accordingly, pump piston 30 is driven by, and in exact unison with, actuator piston 50 at a common velocity V. A wide variety of other and different appropriate linear actuators may be utilized.

A sheath stream fluid reservoir 70 is connected to one leg of a three-legged junction 79 by conduit 72. A branch conduit 74 connects junction 79 to flow cell inlet 24; and a branch conduit 75 connects junction 79 to pump inlet/outlet 44. A check valve 76 is disposed along conduit 72 between reservoir 70 and junction 79 to permit fluid flow only from reservoir 70. A check valve 77 is disposed along branch conduit 74 between conduit 72 and flow cell inlet 24 to permit fluid flow only toward inlet 24.

A conduit 78 connects flow cell outlet 26 to waste. Branch conduit 80 connects pump inlet/outlet 46 as shown to three-legged junction 81. Check valves 82 and 84 are disposed along conduit 78 between flow cell outlet 26 and junction 81, and between junction 81 and the waste disposal end of conduit 78, respectively. Check valve 82 permits fluid flow only from flow cell outlet 26, and check valve 84 prevents fluid inflow to the pump inlet/outlet 46 through conduit 78.

Start and stop count detector means 86 and 88 are operatively connected as shown by connector 90 to the detecting and counting means 27. A mark or like indicia 92 on pump piston rod 34 and is sensed upon its passage between the respective start and stop count detector means 86 and 88 to start and stop, respectively, the operation of detecting means 27. As indicated, start and stop count detector means 86 and 88 are spaced by a distance L.

Sample, reagent and wash liquid supply means are indicated generally at 94, and comprise a reaction chamber 96 to which sample and reagent fluids are supplied through sample and reagent inlet conduit 98 from sample and reagent supplier 100 which may take any known form appropriate for use with automated sample analysis systems. Reaction chamber 96 includes a drain conduit 102 extending downwardly from the chamber bottom to vacuum, and a solenoid operated valve 104 is disposed in drain conduit 102 and is operable to permit or prevent flow therethrough. A reacted sample inlet conduit 68 connects drain conduit 102 above valve 104 to sample inlet 22 of the flow cell.

A constantly pressurized wash liquid reservoir is indicated at 106 and is effective to supply wash liquid to to reaction chamber 96 through wash liquid inlet conduit 108. A solenoid operated valve 110 is disposed in conduit 108 and is operable to permit or prevent flow therethrough.

A controller is indicated schematically at 111 and is operable through connectors 112, 114, 116, 118, 120 and 122 to control and coordinate the respective operations of sample and reagent supplier 100, solenoid controlled valves 110, 104 and 60, start and stop count detectors 86 and 88, and detecting and counting means 27, respectively.

A representative application of the apparatus and method of this invention is the counting and sizing of white blood cells in a series of diluted blood samples as are supplied in turn, with an appropriate reagent quantity, to the reaction chamber 96 by sample and reagent supplier 100 in timed sequence with overall apparatus operation as determined by controller 111. As generally described, an appropriate quantity of at least one sample, and an appropriate quantity of sheath stream fluid are pumped from reaction chamber 96 and reservoir 70 through the flow cell 12 for white cell counting and sizing by movement of pump piston 30 from the right-most to the left-most limits of its stroke in pump cylinder 28. The remainder of that sample in reaction chamber 96 is then emptied therefrom, and a wash liquid and the succeeding sample and reagent quantities are supplied thereto in that order. Conversely, movement of pump piston 30 from the left-most to the right-most limits of its stroke in cylinder 28 is effective to fill pump 14 with sheath stream fluid from reservoir 70, and pump the previously analyzed sample and sheath stream fluid quantites to waste.

More specifically, with pump piston 30 at the right-most limit of its stroke, pump chamber 40 filled with sheath stream fluid, reaction chamber 96 containing an appropriately reacted quantity of the next sample to be analyzed, and valves 104 and 110 closed as directed by controller 111, it will be clear that actuation of solenoid 60 by controller 111 to reverse pump drive means 16 will operate to commence the drive of pump piston 30 at constant velocity V to the left. Accordingly, the sheath stream fluid in now contracting pump chamber 40 is pumped out at a constant flow rate Q1, through sheath fluid inlet/outlet 44, conduit 75, junction 79, and branch conduit 74 into sheath stream flow cell inlet 24 for flow through the flow cell 12. Concomitantly, the now expanding pump chamber 42 aspirates at a constant combined flow rate Q2 both the sample fluid from reaction chamber 96—through drain 102, conduit 68, flow cell sample fluid inlet 22, the flow cell 12, flow cell outlet 26, conduit 78, junction 81, branch conduit 80 and pump inlet/outlet 46—and the sheath stream fluid from flow cell outlet 26 through conduit 78, junction 81, branch conduit 80 and pump inlet/outlet 46. As flow rates Q1 and Q2 are precisely controlled, the flow rate of the sample fluid passing through the flow cell 12 is likewise precisely controlled. Accordingly, the respective flow rates of the sample and sheath stream fluids through the flow cell 12 are precisely controlled and properly related, with the formation as described hereinabove in the flow cell of the concentric, substantially unmixed sample and sheath streams for analysis of the former.

With incompressible sheath stream and sample fluids, flow rates Q1 and Q2 are precisely defined by the following equations:

Equation 1:
$$Q1=\frac{V\pi(D^2-D1^2)}{4}$$

Equation 2:
$$Q2=\frac{V\pi(D^2-D2^2)}{4}$$

Since, as is shown by the Fig., D1 is greater than D2, it must follow that Q2 is greater than Q1, and that the difference therebetween in precisely definable by the following equation:

Equation 3:
$$Q2-Q1=\frac{V\pi}{4}(D1^2-D2^2)$$

In apparatus 10 as illustrated and described, the constant flow rate QSH of the sheath stream fluid from reservoir 70 into and through the flow cell 12 will be precisely equal to Q1, while the flow rate QS of the sample fluid from reservoir 96 into and through the flow cell 12 will also be constant and precisely equal to the difference between Q2 and Q1. Thus will be clear that a precisely controlled differential pumping arrangement is provided for by the utilization as described of double acting pump 14.

The relative dispositions of mark 92 on pump piston rod 34 and the start count detector means 86 are determined such that once a steady state condition of the sheath-sample fluid stream through flow chamber 20 is reached, as described hereinabove, the latter controls detecting and counting means 27 to commence the counting and sizing of the white blood cells in the diluted and reacted blood sample passing through flow chamber 20. The operation of detecting and counting means 27 continues until mark 92, and accordingly the pump piston, have moved the distance L to the left, whereupon stop count detector 88 detects mark 92 and inhibits detecting and counting means 27. Accordingly, cell counting and sizing is effected for a precisely controlled, and readily reproducible, volume of sample fluid.

The detection of mark 92 by stop count detector 88 is also effective, through controller 111, to open valve 104 to rapidly drain the remaining, reacted sample fluid from reaction chamber 96 to vacuum through drain conduit 102. As a result, a segment of air is aspirated from the now empty reaction chamber 96 through drain conduit 102, conduit 68, flow cell inlet 22 and the flow chamber 20 to, in combination with the sheath stream fluid which continues to flow as described through the flow cell 12, commence the removal of the residue of the sample fluid from the flow chamber 20. Shortly thereafter, with piston 30 continuing its driven movement to the left as described, controller 111 is effective to open valve 110 with the result that wash liquid will be pressure pumped from reservoir 106 through conduit 108 to the reaction chamber 96 to wash the residue of the sample fluid therefrom. In addition, some of this wash liquid will be aspirated from the reaction chamber 96 as described to and through the flow cell 12 to remove sample fluid residue from the relevant portion of drain conduit 102, conduit 68 and flow cell inlet 22 and, in combination with the sheath stream fluid which continues to flow through the flow cell, continue sample fluid residue removal from the flow chamber 20.

This removal of sample fluid residue, or washing action, continues—with attendant minimization of sample fluid carryover—until pump piston 30 comes to the left-most limit of its stroke in pump cylinder 28; whereupon controller 111 operates valve 60 to again reverse the direction of movement of drive means 16 to commence the left-to-right stroke of pump piston 30. As this occurs, controller 111 operates to close valves 110 and 104 in that order to assure that all wash liquid is drained from reaction chamber 96, and subsequently directs reagent and sample supplier 100 to supply appropriate quantities of the succeeding sample and reagent to reaction chamber 96.

The left-to-right stroke of pump piston 30 is effective to aspirate sheath stream fluid from reservoir 70 into expanding pump chamber 40 through conduit 72, junction 79, conduit 75 and pump inlet/outlet 44; while concomitantly pumping the commingled sheath stream and reacted sample fluids from contracting pump chamber 42 to waste through pump inlet/outlet 46, conduit 80, junction 81 and conduit 78. As a result, the return of pump piston 30 to the right-most limit of its stroke in pump cylinder 28 will place the apparatus 10 in condition for the next cycle of sample analysis operation as described. This operation continues as described until all of the diluted blood samples in the sample series of interest have been flowed as described through the sheath stream flow cell 12 for cell counting and sizing.

By the above is believed made clear that the particularly significant advantages of the novel apparatus and method include each of the following in full accordance with the heretofore stated objects of this invention:

(a) Precisely the same readily reproducible volume of each of the samples is flowed through sheath stream flow cell 12 attendant each operational cycle of the detecting and counting means 27;

(b) Precisely the same volume of sheath stream fluid is flowed through the sheath flow cell 12 attendant each operational cycle of the detecting and counting means 27, thereby precisely coordinating the sample-sheath stream fluid ratio for each of the samples;

(c) The respectively uniform sample and sheath stream volumes of (a) and (b) are flowed through the sheath stream flow cell 12 at precisely the same velocity; thus resulting in precisely the same stable sample fluid stream velocity and diameter, and sample particle velocity, through the flow cell for each of the samples with attendant maximization of compatibility between the operational characteristics of the sheath stream flow cell 12 and the particle detecting and counting means 27;

(d) Damage to the sample fluid particles of interest is minimized (particularly significant with regard to relatively fragile particles such as white or red blood cells) because the same are aspirated rather than positively pumped from sample reservoir 96 to and through sheath stream flow cell 12;

(e) Sample carryover is reduced due to the significantly reduced length of sample fluid conduit 68, the flow cell-purging effects of air segment, wash liquid and sheath fluid flow through flow cell 12 immediately following operation of stop count detector means 88 by mark 92, and the flow cell-purging effect of sample-sheath stream fluid flow through flow cell 12 for each succeeding sample prior to operation of start count detector means 86 by mark 92;

(f) The need for, and complexity of, apparatus calibration is substantially reduced due to the inherently stable operational characteristics of the double acting pump means 14 and the pump drive means 16;

(g) The rate of sample analyses (as limited only by the operational characteristics of the sheath stream flow cell 12 and the particle detecting and counting means 27) is significantly increased due to the excellent high speed operational characteristics of the pump means 14; and

(h) Particular ease of precise and consistent adjustment in sample fluid velocity and sample fluid volume through the sheath stream flow cell 12 during operation of the particle counting and detecting means 27 as may respectively be readily accomplished by adjustment in the pressure of the fluid which drives linear actuator means 16, and by adjustment in the distance L between the start and stop count detector means 86 and 88.

All of the above combine to provide high accuracy, consistency and reproducibility of the sample analysis results.

**Claims**

1. Apparatus for the positively controlled and coordinated supply of first and second fluids from respective sources thereof (70, 96) to sheath stream flow cell analysis means which includes a sheath stream flow cell (20) having inlet means (24, 22) and outlet means (26), which apparatus includes pump means (14) operatively associated with said sheath stream flow cell inlet means and with the respective sources of said first and second fluids, said pump means being operable to pump at a first flow rate the first of said fluids from its source (70) to said sheath stream flow cell inlet means for flow through said sheath stream flow cell, characterized in that the pump means is a differential pump means and is operatively associated also with said flow cell outlet means and is operable, whilst pumping the first of said fluids to said sheath stream flow cell inlet means at said first flow rate, concomitantly to aspirate said second fluid from its source (96) and said first and second fluids through said sheath stream flow cell outlet means at a second flow rate greater than said first flow rate whereby the flow rate of the second of said fluids through said sheath stream flow cell will be equal to the difference between said second and first flow rates, respectively.

2. Apparatus according to claim 1, wherein said sheath stream flow cell analysis means further include detecting means (27) operatively associated with said sheath stream flow cell (20) and operable to detect predetermined characteristics of one of said fluids as the same is flowed through said sheath stream flow cell, the apparatus further comprising detecting means control means (111) operatively associated with said differential pump means (14) and operable to control the operation of said detecting means in accordance with the operation of said differential pump means.

3. Apparatus according to claim 1 or 2, wherein said differential pump means (14) comprise a positive displacement pump.

4. Apparatus according to claim 1 or 2, wherein said differential pump means (14) comprise a double acting piston pump which includes a pump cylinder (28) and a pump piston (30) reciprocatable therein and dividing the same into first (40) and second (42) positive displacement pumping chambers, with the first of said pumping chambers being operable to pump the first of said fluids therefrom to said sheath stream flow cell inlet means, and the second of said pumping chambers being operable concomitantly to aspirate the first and second of said fluids through said sheath stream flow cell inlet (22, 24) and outlet (26) means into said second pumping chamber.

5. Apparatus according to claim 4, wherein said pump piston (30) comprises opposed piston faces (36, 38) of different effective areas, with the effective area of the piston face (36) for said first pumping chamber (40) being less than the effective area of the piston face (38) for the second (42) of said pumping chambers.

6. Apparatus according to any preceding claim, further comprising drive means (16) operatively associated with said differential pump means (14) and operable to drive the same at substantially constant linear velocity, whereby said first and second flow rates, and the flow rate of the second of said fluids, through the sheath stream flow cell (20) will respectively be substantially constant.

7. Apparatus according to any preceding claim, which is arranged so that the first of said fluids is a sheath stream liquid, and the second of said fluids is a sample liquid for analysis by said sheath stream flow cell analysis means.

8. A method for the positively controlled and coordinated supply of first and second fluids from respective sources thereof to sheath stream flow cell analysis means which include a sheath stream flow cell having inlet and outlet means, said method comprising the step of pumping the first said fluid at a first flow rate from its source to said sheath stream flow cell inlet means for flow through said sheath stream flow cell, characterized in that concomitantly with said pumping of said first fluid, the second of said fluids is aspirated from its source and the first and second of said fluids are aspirated from said sheath stream flow cell outlet means, at a second flow rate, greater than said first flow rate, whereby the flow rate of the second of said fluids through said sheath stream flow cell is equal to the difference between said second and first flow rates, respectively.

**Patentansprüche**

1. Vorrichtung zur gesteuerten und koordinierten Zuführung eines ersten und eines zweiten Fluids aus entsprechenden Quellen (70, 96) zu Mantelstromdurchflußzellenanalysiermitteln, die eine Mantelstromdurchflußzelle (20) mit Einlaßmitteln (24, 22) und Auslaßmitteln (26) enthalten, wobei die Vorrichtung Pumpenmittel (14) umfaßt, die mit den Mantelstromdurchflußzelleneinlaßmitteln und den Quellen für das erste und das zweite Fluid verbunden sind und die betreibbar sind, um das erste der Fluide mit einer ersten Strömungsgeschwindigkeit von seiner Quelle (70) zu den Mantelstromdurchflußzelleneinlaßmitteln zu pumpen, damit es durch die Mantelstromdurchflußzelle hindurchströmt, dadurch gekennzeichnet, daß das Pumpenmittel ein Differentialpumpenmithel und außerdem mit den Durchflußzellenauslaßmitteln verbunden und derart betreibbar ist, daß während des Pumpens des ersten der Fluide mit der ersten Strömungsgeschwindigkeit zu den Mantelstromdurchflußzelleneinlaßmitteln gleichzeitig das zweite Fluid aus seiner Quelle (96) angesaugt und das erste und zweite Fluid mit einer zweiten Strömungsgeschwindigkeit, die größer als die erste Strömungsgeschwindigkeit ist, durch die Mantelstromdurchflußzellenauslaßmittel gesaugt werden, so daß die Strömungsgeschwindigkeit des zweiten Fluids durch die Mantelstromdurchflußzelle gleich der Differenz zwischen zweiter und erster Strömungsgeschwindigkeit ist.

2. Vorrichtung gemäß Anspruch 1, dadurch gekennzeichnet, daß die Mantelstromdurchflußzellenanalysiermittel außerdem Erfassungsmittel (27) umfassen, die mit der Mantelstromdurchflußzelle (20) verbunden und derart betreibbar sind, daß sie vorherbestimmte Eigenschaften eines der Fluide während dessen Durchflusses durch die Mantelstromdurchflußzelle erfassen, und daß die Vorrichtung außerdem Steuerungsmittel (111) für die Erfassungsmittel umfaßt, die mit den Differentialpumpenmitteln (14) verbunden und derart betriebbar sind, daß sie die Arbeitsweise der Erfassungsmittel nach Maßgabe der Arbeitsweise der Differentialpumpenmittel steuern.

3. Vorrichtung gemäß Anspruch 1 oder 2, dadurch gekennzeichnet, daß die Differentialpumpenmittel (14) eine Verdrängungspumpe umfassen.

4. Vorrichtung gemäß Anspruch 1 oder 2, dadurch gekennzeichnet, daß die Differentialpumpenmittel (14) eine doppeltwirkende Kolbenpumpe umfassen, die einen Pumpenzylinder (28) und einen Pumpenkolben (30) aufweist, der in dem Zylinder hin- und herbewegbar ist und ihn in eine erste (40) und eine zweite (42) Verdrängungspumpenkammer aufteilt, wobei die erste der Pumpenkammern derart betreibbar ist, daß das erste der Fluide aus ihr zu den Mantelstromdurchflußzelleneinlaßmitteln gepumpt wird, und die zweite der Pumpenkammern derart betreibbar ist, daß zugleich das erste und zweite Fluid durch Mantelstromdurchflußzelleneinlaßmittel (22, 24) und -auslaßmittel (26) in die zweite Pumpenkammer gesaugt werden.

5. Vorrichtung gemäß Anspruch 4, dadurch gekennzeichnet, daß der Pumpenkolben (30) entgegengesetzte Kolbenoberflächen (36, 38) von unterschiedlicher wirksamer Fläche aufweist, wobei die wirksame Fläche der Kolbenoberfläche (36) für die erste Pumpenkammer (40) kleiner ist als diejenige der Kolbenoberfläche (38) für die zweite Pumpenkammer (42).

6. Vorrichtung gemäß einem der vorhergehenden Ansprüche, dadurch gekennzeichnet, daß sie außerdem Antriebsmittel (16) aufweist, die mit den Differentialpumpenmitteln (14) verbunden und derart betreibbar sind, daß sie die Pumpenmittel mit praktisch konstanter Lineargeschwindigkeit antrieben, so daß erste und zweite Strömungsgeschwindigkeit bzw. die Strömungsgeschwindigkeit des zweiten Fluids durch die Mantelstromdurchflußzelle (20) praktisch konstant sind.

7. Vorrichtung gemäß einem der vorhergehenden Ansprüche, dadurch gekennzeichnet, daß sie derart angeordnet ist, daß das erste Fluid eine Mantelstromflüssigkeit und das zweite Fluid eine zum Analysieren durch die Mantelstromdurchflußzellenanalysiermittel bestimmte Probenflüssigkeit ist.

8. Verfahren zur gesteuerten und koordinierten Zuführung eines ersten und zweiten Fluids aus entsprechenden Quellen dafür zu Mantelstromdurchflußzellenanalysiermitteln, die eine Mantelstromdurchflußzelle mit Einlaß- und Auslaßmitteln aufweisen, wobei das erste Fluid mit einer ersten Strömungsgeschwindigkeit von seiner Quelle zu den Mantelstromdurchflußzelleneinlaßmitteln gepumpt wird, damit es durch die Mantelstromdurchflußzelle hindurchströmt, dadurch gekennzeichnet, daß gleichzeitig mit dem Pumpen des ersten Fluids das zweite Fluid aus seiner Quelle sowie erstes und zweites Fluid von den Mantelstromdurchflußzellenauslaßmitteln aus mit einer zweiten Strömungsgeschwindigkeit, die größer als die erste Strömungsgeschwindigkeit ist, angesaugt werden, so daß die Strömungsgeschwindigkeit des zweiten Fluids durch die Mantelstromdurchflußzelle gleich der Differnz zwischen erster und zweiter Strömungsgeschwindigkeit ist.

## Revendications

1. Appareil pour l'alimentation à commande volumétrique et coordonnée, d'un premier et d'un deuxième fluides, à partir de leurs sources respectives (70, 96) vers un moyen d'analyse du type cellule d'écoulement à courant de gaine, moyen qui comprend une cellule d'analyse (20) à courant de gaine possédant un moyen d'admission (24, 22) et un moyen d'évacuation (26), lequel appareil comprend un moyen de pompe (14) associé de manière opérative audit moyen d'admission de la cellule d'analyse à courant de gaine et aux sources respectives desdits premier et deuxième fluides, ledit moyen de pompe pouvant fonctionner de façon à pomper à un premier débit le premier desdits fluides depuis sa source (70) vers ledit moyen d'admission de la cellule d'analyse à courant de gaine, pour s'écouler à travers ladite cellule d'analyse à courant de gaine, caractérisé en ce que le moyen de pompe est un moyen de pompe différentielle et est aussie associé de manière opérative audit moyen d'évacuation de la cellule d'analyse, et peut fonctionner pendant la pompage du premier desdits fluides vers ledit moyen d'admission de la cellule d'analyse à courant de gaine audit premier débit, pour aspirer concomitamment ledit deuxième fluide à partir de la source (96) et lesdits premier et deuxième fluides à travers ledit moyen d'évacuation de la cellule d'analyse à courant de gaine à un deuxième débit supérieur audit premier débit, le débit du deuxième desdits fluides traversant ladite cellule d'analyse à courant de gaine étant égal à la différence entre respectivement ledit deuxième et ledit premier débits.

2. Appareil selon la revendication 1, dans lequel ledit moyen d'analyse du type cellule d'écoulement à courant de gaine comprend en outre un moyen de détection (27) associé de manière opérative à ladite cellule d'analyse (20) à courant de gaine et pouvant fonctionner pour détecter des caractéristiques prédéterminées de l'un desdits fluides quand ce dernier s'écoule à travers ladite cellule d'analyse à courant de gaine, l'appareil comprenant en outre un moyen (111) de commande du moyen de détection, associé de manière opérative audit moyen de pompe différentielle (14) et adapté à commander le fonctionnement dudit moyen de détection en fonction du fonctionnement dudit moyen de pompe différentielle.

3. Appareil selon les revendications 1 ou 2, dans lequel ledit moyen de pompe différentielle (14) comprend une pompe volumétrique.

4. Appareil selon les revendications 1 ou 2, dans lequel ledit moyen de pompe différentielle (14) comprend une pompe à piston à double effet qui comprend un cylindre de pompe (28) et un piston de pompe (30) pouvant se déplacer en va-et-vient à l'intérieur du cylindre et subdivisant ce dernier en une première chambre (40) et une deuxième chambre (42) de pompage volumétrique, la première desdites chambres de pompage pouvant fonctionner de façon à en pomper le premier desdits fluides vers ledit moyen d'admission de la cellule d'analyse à courant de gaine, et la deuxième desdites chambres de pompage pouvant fonctionner simultanément pour aspirer le premier et le deuxième desdits fluides à travers lesdits moyens d'admission (22, 24) et d'évacuation (26) de la cellule d'analyse à courant de gaine, vers ladite deuxième chambre de pompage.

5. Appareil selon la revendication 4, dans lequel ledit piston de pompe (30) comprend des faces de piston opposées (36, 38) d'aires utiles différentes, l'aire utile de la face de piston (36) correspondant à ladite première chambre de pompage (40) étant inférieure à l'aire utile de la face de piston (38) correspondant à la deuxième (42) desdites chambres de pompage.

6. Appareil selon l'une quelconque des revendications précédentes, comprenant en outre un moyen d'entraînement (16) associé de manière opérative audit moyen de pompe différentielle (14) et pouvant fonctionner pour entraîner ce dernier à une vitesse linéaire pratiquement constante, ledit premier débit et ledit deuxième débit, ainsi que le débit du deuxième desdits fluides à travers la cellule d'analyse (20) à courant de gaine étant respectivement pratiquement constants.

7. Appareil selon l'une quelconque des revendications précédentes, qui est agencé de façon que le premier desdits fluides soit un liquide de courant de gaine, et que le deuxième desdits fluides soit un liquide échantillon pour analyse par ledit moyen d'analyse du type cellule d'écoulement à courant de gaine.

8. Procédé pour l'alimentation à commande volumètrique et coordonnée, d'un premier et d'un deuxième fluides provenant de leurs sources respectives vers un moyen d'analyse du type cellule d'écoulement à courant de gaine, qui comprend une cellule d'analyse à courant de gaine possédant un moyen d'admission et un moyen d'évacuation, ledit procédé comprenant l'étape consistant à pomper ledit premier fluide à un premier débit, de sa source vers ledit moyen d'admission de la cellule d'analyse à courant de gaine, pour écoulement à travers ladite cellule d'analyse à courant de gaine, caractérisé en ce que, concomitamment audit pompage dudit premier fluide, le deuxième desdits fluides est aspiré de sa source, et le premier et le deuxième desdits fluides sont aspirés dudit moyen d'évacuation de la cellule d'analyse à courant de gaine, à un deuxième débit, supérieur audit premier débit, le débit du deuxième desdits fluides à travers ladite cellule d'analyse à courant de gaine étant égal à la différence respectivement entre ledit deuxième et ledit premier débits.